Europäisches Patentamt

European Patent Office

Office européen des brevets

(19)

(11) EP 1 193 914 A2

## (12) EUROPEAN PATENT APPLICATION

(43) Date of publication:
03.04.2002 Bulletin 2002/14

(51) Int Cl.⁷: $H04L\ 12/40$

(21) Application number: 01308342.3

(22) Date of filing: 28.09.2001

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **29.09.2000 JP 2000301414**

(71) Applicant: **Sony Corporation
Tokyo 141-0001 (JP)**

(72) Inventors:
• **Masunaga, Shinya, c/o Sony Corporation
Shinagawa-ku, Tokyo (JP)**
• **Niwa, Yoshikatsu, c/o Sony Corporation
Shinagawa-ku, Tokyo (JP)**

(74) Representative: **Pratt, Richard Wilson et al
D. Young & Co,
21 New Fetter Lane
London EC4A 1DA (GB)**

(54) **Data transmission and reception**

(57)    An apparatus transmits and receives data between an external device and a pertinent bus of a plurality of buses connected by a bridge The external device which forms one portion of the bridge comprises a storing means for storing first information and second information. The first information represents whether the transmission source or the transmission destination of the data is the data transmitting and receiving apparatus. The second information represents whether or not to the data should be transmitted to the pertinent bus . A setting means sets the first information and the second information stored in the storing means to a predetermined state corresponding to an external request. A transmitting and receiving means transmits and receives the data to/from the pertinent bus or the external device corresponding to the first information and the second information stored in the storing means.

## Fig. 15

**Description**

The present invention relates to a data transmitting and receiving apparatus and a data transmitting and receiving method. An embodiment relates to those suitable for a network system that complies with for example IEEE (The Institute of Electrical and Electronics Engineers) 1394 high performance serial bus standard (hereinafter referred to as IEEE 1394 standard).

So far, as a bus standard for transferring multimedia data at high speed and on real time, IEEE 1394 standard is known. Because of easy handling of the IEEE 1394 standard, there is a large expectation for home networks.

In the IEEE 1394 standard, with two types of systems that are daisy chain and node branch, devices of up to 63 nodes and up to 16 hops can be connected.

In addition, the IEEE 1394 standard defines three communication speeds S100 (98.304 [Mbps]), S200 (196.608 [Mbps]), and S400 (393.216 [Mbps]). The IEEE 1394 standard defines a 1394-port that has an upper transfer speed so that the port has a compatibility with a lower transfer speed. Thus, each node can transfer data to a destination node at the maximum transfer speed that is common in all nodes on the bus.

Moreover, the IEEE 1394 standard allows a cable to be connected or disconnected and the power of a node to be turned on or off while another node is operating in the above-described connection state. In the IEEE 1394 standard, when a node is added or deleted, the topology of nodes is automatically restructured and node IDs are reassigned.

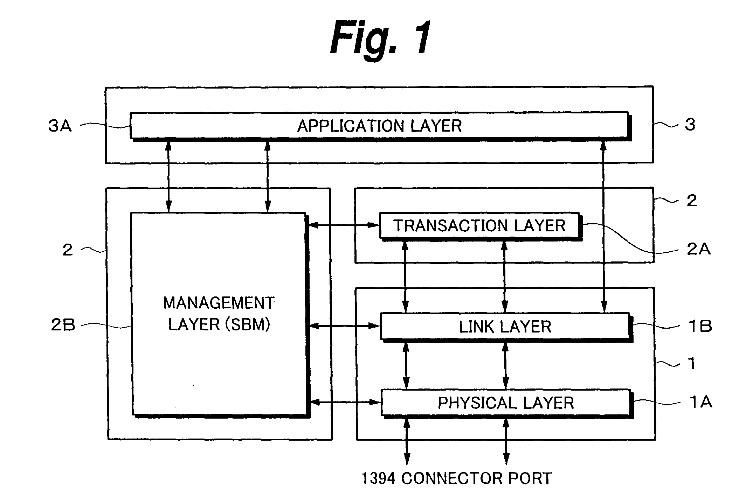

Fig. 1 shows structural elements and protocol architecture of an interface that complies with the IEEE 1394 standard. As is clear from Fig. 1, the interface that complies with the IEEE 1394 standard can be divided into three functional blocks that are hardware 1, firmware 2, and software 3.

In this case, the hardware 1 is composed of a physical layer (PHY layer) 1A and a link layer 1B. The physical layer 1A directly drives a signal that corresponds to the IEEE 1394 standard. The link layer 1B has a host interface and an interface with the physical layer 1A.

The firmware 2 is composed of a transaction layer 2A and a management layer 2B. The transaction layer 2A is composed of a management driver that performs a real operation for an interface that complies with the IEEE 1394 standard. The management layer 2B is composed of a management driver referred to as SBM (Serial Bus Management). The management driver complies with the IEEE 1394 standard.

The software 3 is mainly composed of an application layer 3A. The application layer 3A is composed of user software and management software. The management software interfaces with the transaction layer 2A and the management layer 2B.

In the IEEE 1394 standard, a transfer operation performed in a network is referred to as sub action. The IEEE 1394 standard defines two sub actions that are asynchronous transfer mode (this mode is referred to as asynchronous) and isochronous transfer mode that assures a transfer bandwidth (this mode is referred to as isochronous). In addition, each sub action is divided into three parts that are arbitration, packet transmission (data transfer), and acknowledge. In the isochronous transfer mode, the acknowledgement is omitted.

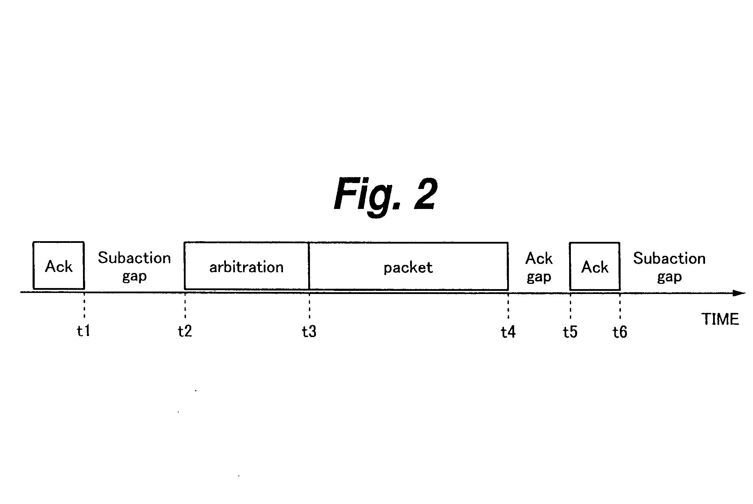

In the asynchronous transfer mode, data is asynchronously transferred. Fig. 2 shows chronological transition states in the asynchronous transfer mode. In Fig. 2, each node monitors the period of the first sub action gap ($t_1$ to $t_2$) that is a bus idle state so as to determine whether data has been transferred as the preceding session and data can be transferred as the next session.

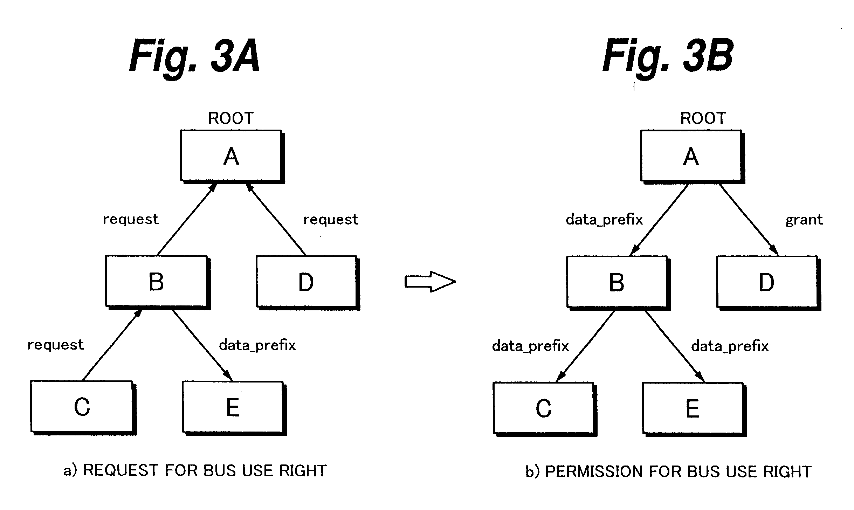

When an idle state takes place for a predetermined time period after data flows on the bus, a node that needs to transfer data determines that the bus can be used and starts arbitration ($t_2$ to $t_3$) for obtaining the bus use right. Figs. 3A and 3B show an example of connections of a plurality of nodes. In Figs. 3A and 3B, a node referred to as root denoted by "A" determines to which node the bus use right is given. In Figs. 3A and 3B, "A", "B", "C", "D", and "E" represent nodes.

When a node is given the bus use right in the arbitration, the node executes a packet transmission (t3 to t4) as a data transfer ($t_3$ to $t_4$). After data has been transferred, the node that has received the data sends back reception acknowledgement reply code Ack corresponding to the received result ($t_5$ to $t_6$) so as to execute acknowledgement. When the acknowledgement is executed, the nodes on the transmission side and the reception side can know that data has been correctly transferred with the reception acknowledgement reply code Ack.

Thereafter, a sub action gap (namely, the bus idle state) takes place. In the state, the data transfer operation is repeated.

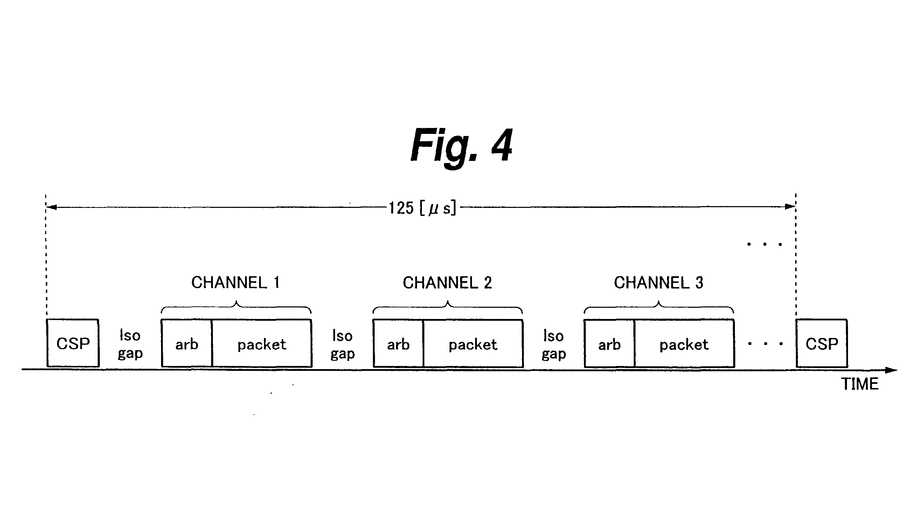

On the other hand, in the isochronous transfer mode, as shown in Fig. 4, data is transferred basically in the same format as the asynchronous transfer mode. However, the data transfer in the isochronous transfer mode has higher priority than the data transfer in the asynchronous transfer mode. The data transfer in the isochronous transfer mode (hereinafter referred to as isochronous transfer) is performed after a CSP (Cycle Start Packet) issued by a cycle master node (normally, a root node) at intervals of around 8 [kHz]. As a result, in the isochronous transfer mode, the transfer bandwidth is assured. Consequently, real time data can be transferred.

When a plurality of nodes simultaneously perform the isochronous transfer for real time data, channel IDs are assigned to transfer data of each node so as to distinguish the contents of the transfer data. Corresponding to a pertinent channel ID, a node on the reception side can receive required data.

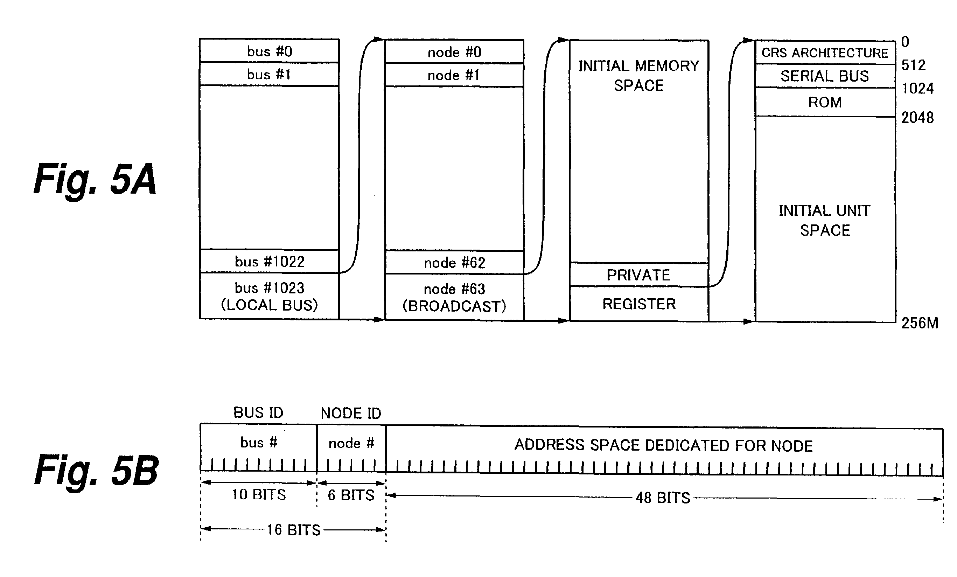

In the IEEE 1394 standard, data is addressed corresponding to a CSR (Control and Status Register) architecture defined in IEEE 1212 standard. As shown in Fig. 5B, the CSR architecture has an address space of 64 bits. The high order 16 bits represent a destination node, whereas the low order 48 bits represent a memory space of the node.

The high order 10 bits of the 16 bits for the destination node are a bus ID, whereas the low order 6 bits thereof are a node ID. Thus, in the IEEE 1394 standard, except for broadcast addresses (all bits of an ID are 1) of the bus ID and the node ID, up to 1023 buses can be represented. Up to 63 nodes can be connected to each bus.

On the other hand, in the IEEE 1394 standard, when the number of nodes is increased or decreased or when a node issues an initialization request, a bus reset signal is propagated on the bus. When a node receives the bus reset signal, the node removes the current topology information, successively performs three phases of bus initialize, tree identify, and self identify, and structures new topology information.

In this case, in the bus initialize phase, each node recognizes the state of the local port (namely, to which node the local port is connected and whether the local portion is not connected to any node). In addition, each node determines whether it is a leaf (connected to one node) or a branch (connected to two or more nodes).

In the tree identify phase, each port transmits an identification signal to other nodes connected each other so as to determine the relation of parent and child of each port.

In reality, a node (referred to as first node) that has a plurality of ports and of which the status of only one port has not been determined transmits TX_PARENT_NOTIFY state to another node (referred to second node) through a port connected thereto. When the second node receives TX_PARENT_NOTIFY state from the first node, the second node treats the port as a child port (that means that the port is connected to a child node when viewed from the port). The second node transmits TX_CHILD_NOTIFY state to the first node. When the first node receives TX_CHILD_NOTIFY state, the first node treats the port as a parent node (that means that the port is connected to a parent node when viewed from the port) and determines the relation of parent and child of the nodes. This operation is repeated. As a result, a node that is a parent of all nodes of the bus (namely, one node that has only child ports) is determined. In the IEEE 1394 standard, this node is referred to as root. As was described above (see Figs. 3A and 3B), the root has a function for permitting a packet to be transmitted to all other nodes.

In the self identify phase, the root successively gives a transmission permission to individual nodes in the ascending order of port numbers corresponding to the leaf priority rule. When a node is given the transmission permission, the node successively transmits the self ID packet to the entire bus. As a result, the node ID is determined and the topology of the bus is uniquely determined.

After the three phases have been executed, a packet can be transmitted on the bus. As a result, a node that needs to transmit a packet can issue a transmission request to the root. At that point, a node that manages a resource necessary for transmitting a data packet in the isochronous transfer mode (hereinafter, the data packet is referred to as isochronous packet) is also determined. This node is referred to as IRM (Isochronous Resource Manager).

The IRM is a node that can become an IRM and that has the largest node ID. Normally, the IRM is the same as the root. A node that becomes an IRM should be provided with three registers that are CHANNELS_AVAILABLE register, BANDWIDTH_AVAILABLE register, and BUS_MANAGER_ID register. On the bus, a node that needs to transmit an isochronous packet requests the IRM for the desired channel and bandwidth. Only when the desired channel and bandwidth are available, the node can transmit an isochronous packet.

In reality, a node that needs to transmit an isochronous packet issues a read quadrate transaction that is a read request for data of one quadrate (4 [bytes]) to CHANNELS_AVAILABLE register and BANDWIDTH_AVAILABLE register of the IRM and obtains the contents thereof. When the desired channel and bandwidth are available, corresponding to the remaining result, the node issues COMPARE & SWAP as a lock transaction that is a data rewrite request to CHANNEL_AVAILABLE register and BANDWIDTH_AVAILABLE register and rewrites the contents thereof. Only when the operation can be successfully completed, the node can transmit an isochronous packet on the bus.

However, several problems have been pointed out on the above-described IEEE 1394 standard.

The first problem is in that the number of nodes connected to a bus is limited. In the IEEE 1394 standard, 16 bits are assigned to addresses of nodes. However, since it is assumed that communications are made on the same bus, actually, only 63 nodes are connected on the bus. Thus, in a large system that requires many devices (nodes), the IEEE 1394 standard cannot be directly applied.

The second problem is in that the initialization due to a bus reset causes the bus transfer efficiency to deteriorate. In other words, in the IEEE 1394 standard, when the number of nodes is increased or decreased or when an initialization request is issued, a bus reset signal is transmitted. Thereafter, the initializing process is performed. However, it will take around 250 [is] after the bus reset is recognized until the arbitration for transmitting a new packet is started. During this period, the bus cannot transfer a packet at all.

The time period of 250 [is] is equivalent to two transfer cycles in the above-described isochronous transfer mode. When packets are not transmitted in the time period, part of a picture or sound may be lost. Thus, the time period may adversely affect a data transfer on real time.

As a means for shortening the bus reset time period, a function referred to as short bus reset is defined in IEEE 1394a - 2000 standard (hereinafter referred to as IEEE 1394a standard) that was standardized for correcting and implementing the IEEE 1394 standard and for defining additional functions thereto. When such a function is used, the bus reset time period can be shortened to around 80 [is].

However, even with such a function, data transfer is suspended for 80 [is]. In addition, when the bus has a node that does not comply with the IEEE 1394a standard, the function cannot be used.

The third problem is in that the bus resource is wasted. Since the IEEE 1394 standard is a standard on a bus, a packet that a particular node transmits is broadcast to the entire bus. Thus, when a packet transfer is performed in such a manner that a small number of nodes require much resource (in particular, an isochronous transfer is performed), it may adversely affect a packet transfer performed between other nodes.

As a method for solving the problems on the IEEE 1394 standard, a 1394-bus bridge has been proposed. The 1394-bus bridge standardizes a function and a protocol for propagating data between buses. Between two buses (hereinafter, each bus is referred to as local bus), it is necessary to dispose at least one 1394-bus bridge (this bridge is hereinafter referred to as bridge). The bridge is composed of at least two 1394-nodes each of which has a special function referred to as portal. Each portal performs a process for a local bus connected thereto and a process for another local bus connected to another portal that composes the bridge.

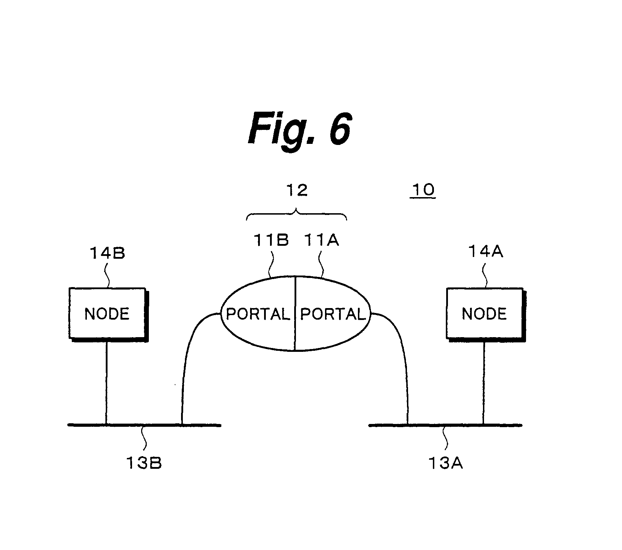

Fig. 6 shows an example of the structure of a network system using such a bridge. Referring to Fig. 6, the network system is composed using a bridge 12 having two portals 11A and 11B. A circular portion that connects the local buses 13A and 13B is a bridge, whereas semicircular portions are portals.

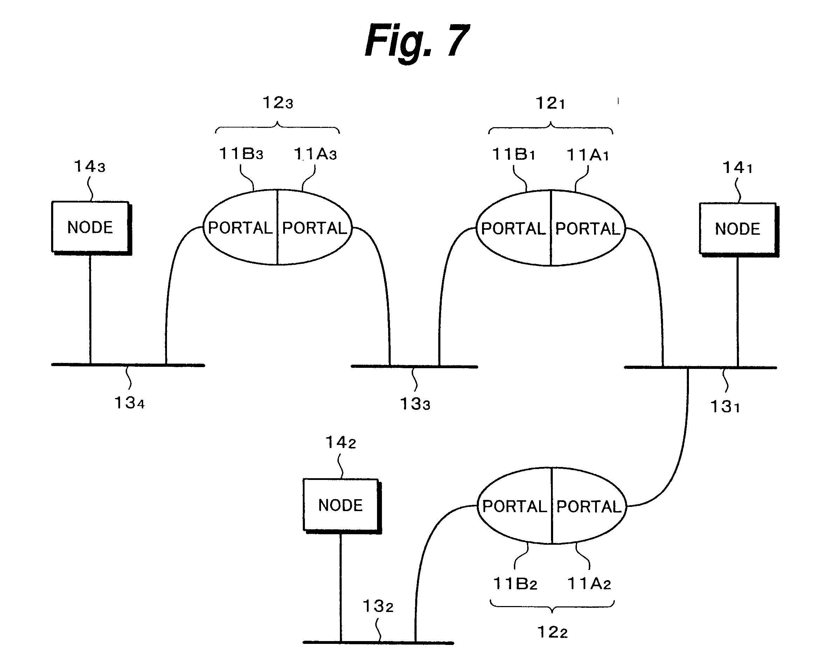

In addition, as shown in Fig. 7, when inter-bus connections are also used with 1394-bridges $12_1$ to $12_3$, up to 1023 buts as the maximum number of nodes defined in the standard can be connected. Local buses $13_1$ to $13_4$ have independent functions of the 1394-buses. When a bus reset and an unnecessary packet that take place on the other local buses $13_1$ to $13_4$ are filtered by portals $11A_1$ to $11A_3$ and $11B_1$ to $11B_3$, a problem of which a bus reset suspends a packet transfer and a problem of which the resource is wasted can be solved. In the following description, for simplicity, it is assumed that the bridge 12 is composed of two portals 11A and 11B. However, it should be noted that the subject matter of the present invention is not limited to two portal bridges.

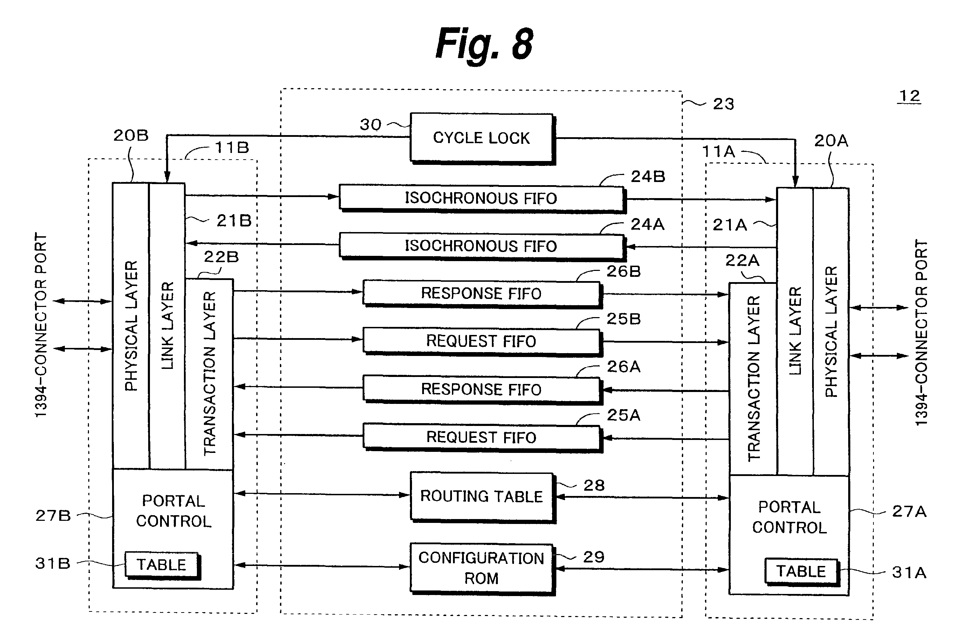

At present, the 1394-bridge standard is standardized by P1394.1WG. The contents of the 1394-bridge standard have been published as a draft. Fig. 8 shows the typical structure of a bridge recited in draft 0.08 P17 of P1394. 1. For simplicity, in Fig. 8, similar portions to those in Fig. 6 are denoted by similar reference numerals.

A bridge 12 is composed of two portals 11A and 11B. Each of the portals 11A and 11B functions as an independent node that complies with the IEEE 1394 standard. The portals 11A and 11B exchange data with other nodes 14A and 14B (see Fig. 6) of the local buses 13A and 13B (see Fig. 6) using physical layers 20A and 20B, link layers 21A and 21B, and transaction layers 22A and 22B connected to the local buses 13A and 13B (see Fig. 6), respectively. When necessary, the portals 11A and 11B transmit (forward) data to the other local buses 13B and 13A through isochronous transfer mode FIFOs (First-In First-Out) 24A and 24B, asynchronous transfer mode response FIFOs 25A and 25B, or request FIFOs 26A and 26B of an internal bus 23, respectively. The structures of the physical layers 20A and 20B, the link layers 21A and 21B, and the transaction layers 22A and 22B of the portals 11A and 11B are the same as those shown in Fig. 1.

Portal controls 27A and 27B have a function of the SBM layer 2B (see Fig. 1) that complies with the IEEE 1394 standard. In addition, each of the portal controls 27A and 27B is provided with a special register and a special table that accomplish the function of the bus bridge that complies with the IEEE 1394 standard. The portal controls 27A and 27B know the topologies of the local buses 13A and 13B connected thereto, respectively. The portal controls 27A and 27B create a routing table 28 corresponding to the entire state of the network. Corresponding to the routing table 28, it is determined whether or not a stream packet is forwarded through the bridge 12.

Using the FIFOs 24A and 24B in the isochronous transfer mode, the bridge 12 can transmit and receive a stream packet through the bridge 12. The P1394. 1 draft practically recites a method for transmitting and receiving a stream packet between the local buses 13A and 13B through the bridge 12. Next, the stream data transmitting and receiving method recited in the draft will be described.

Each of the portals 11A and 11B that can forward stream data through the bridge 12 is provided with a stream routing table that corresponds to the number of streams that each of the portals 11A and 11B can handle at the same time. In the following description, as shown in Fig. 8, it is assumed that the portal controls 27A and 27B is provided with stream routing tables 31A and 31B, respectively.

Entries of each of the stream routing tables 31A and 31B correspond to STREAM_CONTROL [0] to STREAM_CONTROL [n]. In addition, STREAM_CONTROL entries correspond to streams that are forwarded. A portal that has n STREAM_CONTROL entries can forward n streams through the bridge 12 at the same time.

The total number of STREAM_CONTROL entries is stored in a STREAM field of a Bridge_Capabilities entry of a configuration ROM 28 (see Fig. 8). Entries of the portal 11A correspond to those of the portal 11B. In other words, a stream that is received using a STREAM_CONTROL [i] entry of one of the portals 11A and 11B (for example, the portal 11A) is transmitted using a STREAM_CONTROL [i] entry of the other portal (for example, the portal 11B).

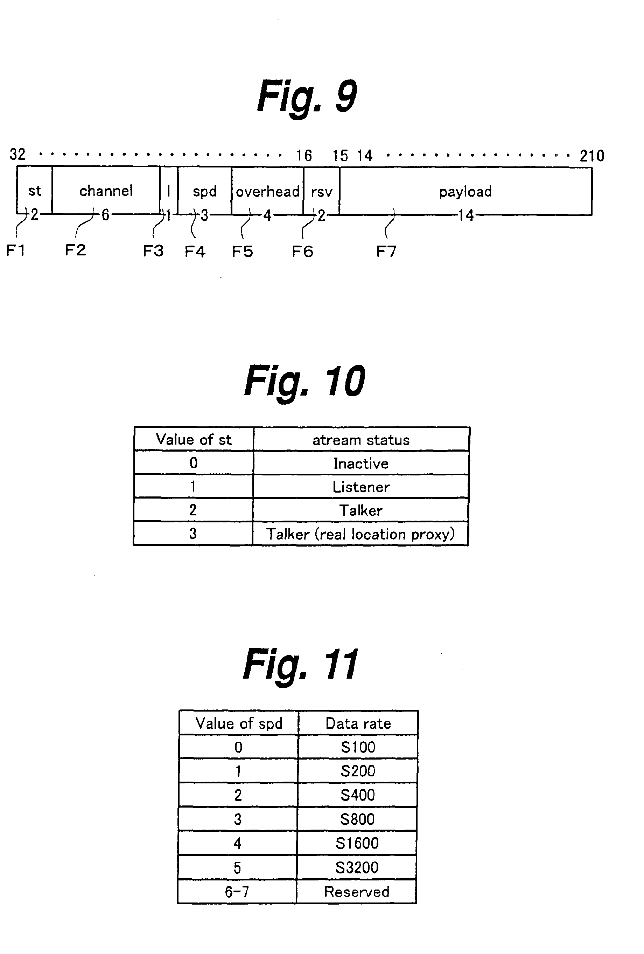

Fig. 9 shows a format of a STREAM_CONTROL entry. In Fig. 9, an "st" field F1 represents the status of the portal 11A or 11B. As shown in Fig. 10, when the value of the "st" field F1 is "1", it represents a reception state (Listener). When the value of the "st" field F1 is "2" or "3", it represents a transmission state (Talker).

In Fig. 9, a "channel" field F2 represents a channel number of a stream that is transmitted or received. The "channel" field F2 is valid only when the value of the "st" field F1 is not "0". When the portal 11A or 11B is in the reception state, the "channel" field F2 represents a channel number of a stream received from the local bus 13A or 13B, respectively. Otherwise, the "channel" field F2 represents a channel number of a stream transmitted to the local bus 13A or 13B. The channel number may be changed when the stream passes through the bridge 12.

In Fig. 9, an "i" field F3 represents that steam data is in the isochronous transfer mode (this stream data is referred to as isochronous stream). When stream data is in the asynchronous transfer mode (this stream data is referred to as asynchronous stream), the value of the "i" field F3 is "0". In Fig.9, a "rsv" field F6 is reserved for a future extension.

In Fig. 9, an "spd" field F4 represents the transmission speed of stream data when the value of the "st" field F1 is "2" or "3". Fig. 11 shows the relation between values of the "spd" field F4 and transmission speeds of stream data. In Fig. 9, an "overhead" field F5 represents a specially assigned bandwidth besides a bandwidth assigned to the size of a packet of an isochronous stream. The bandwidth in the isochronous transfer mode (this bandwidth is referred to as isochronous bandwidth) is represented as bandwidth allocation unit in the IEEE 1394 standard. One "bandwidth allocation unit" represents a time period for which data of one quadrate (4 [bytes]) is transferred at a speed of S1600. One "bandwidth allocation unit" is around 20 [ns].

In Fig. 9, a "payload" field F7 represents the maximum number of quadrates contained in one packet of the stream. The value of the "payload" field F7 does not include the size of the header and CRC (Cyclic Redundancy Check).

The portal control layer requests the IRM for a required bandwidth corresponding to the values of the "spd" field F4, the "overhead" field F5, and the "payload" field F7.

In reality, the portal control layer requests the BANDWIDTH_AVAILABILITY register and the CHANNEL_AVAILABILE register of the IRM for the "bandwidth allocation unit : BWU" (that is given by the following expression) and the channel number that is used.

$$BWU = 512 + (payload + 3) \times 2^{(4 - spd)}$$

(when overhead is 0)

$$BWU = overhead \times 32 + (payload + 3) \times 2^{(4 - spd)}$$

(when overhead is not 0)       (1)

where "payload", "spd", and "overhead" represent the values of the fields F4, F5, and F7, respectively.

In the above-described method, a stream can be transmitted and received through the bridge 12 (see Fig. 6) without a problem. In addition, a stream can be transmitted and received to/from the portals 11A and 11B connected to the local buses 13A and 13B (see Fig. 6) without a problem.

Next, an example of which stream data is transmitted and received through the bridge 12 will be described.

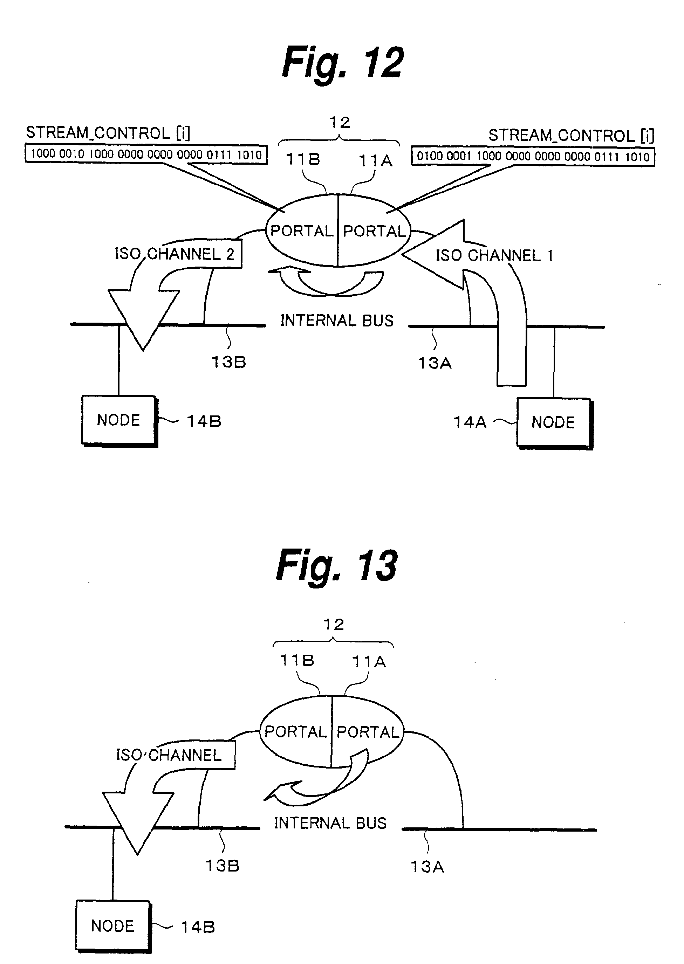

As shown in Fig. 12, when stream data is transmitted from a node 14A on one local bus 13A to a node 14B on another local bus 13B, corresponding to a particular situation, it is necessary to rewrite STREAM_CONTROL entries of portals 11A and 11B connected to the local buses 13A and 13B, respectively.

In such a situation, a node that controls the stream (in this example, the node 14A) accesses the portals 11A and 11B and accesses the IRMs of the local buses 13A and 13B to which the portals 11A and 11B are connected so as to obtain the channels and bandwidths for the data transfer. Thereafter, the node 14A accesses the portals 11A and 11B and rewrites STREAM_CONTROL [i] entries of the portals 11A and 11B in their pertinent states.

When stream data is transmitted with channel number "1" and at a communication speed of S100, as shown in Fig. 12, the node 14A sends to the portal 11A a message that causes "0x1 (Listener)" to be set to the "st" field F1 of the corresponding STREAM_CONTROL [i] entry of the portal 11A (see Fig. 9), "0x1" to the "channel" field F2 thereof, and values corresponding to the speed, size, and type of the stream to the fields F3 to F7 thereof.

In addition, the node 14A sends to the other portal 11B a message that causes "0x2 (Talker)" to be set to the "st" field F1 of the corresponding STREAM_CONTROL [i] entry of the other portal 11B, "0x2" to the "channel" field F2 thereof, and values corresponding to speed, size, and type of the stream to the fields F3 to F7 thereof.

Thereafter, the stream data transmitted from the node 14A to the local bus 13A is received by the portal 11A that has the STREAM_CONTROL [i] entry assigned the corresponding channel number. Thereafter, the stream data is passed to the other portal 11B through the internal bus 23 of the bridge 12. On the other hand, the other portal 11B performs for example a channel number converting operation corresponding to the contents of the corresponding STREAM_CONTROL [i] entry and transmits stream data to the other local bus 13B. The transmitted stream data is received by the reception side node 14B.

However, as shown in Fig. 13, in the IEEE 1394 standard, the case of which stream data is transmitted from the portal 11A to the node 14B of the local bus 13B through the portal 11B and the local bus 13B is not considered.

Thus, when such stream data were handled, in the conventional method, STREAM_CONTROL entries could not be properly set. As a result, stream data could not be transmitted to a designated destination. In addition, when the STREAM_CONTROL entries were set in the above-described method, stream data that is transmitted or received to/from the local bus 13A wound be adversely affected.

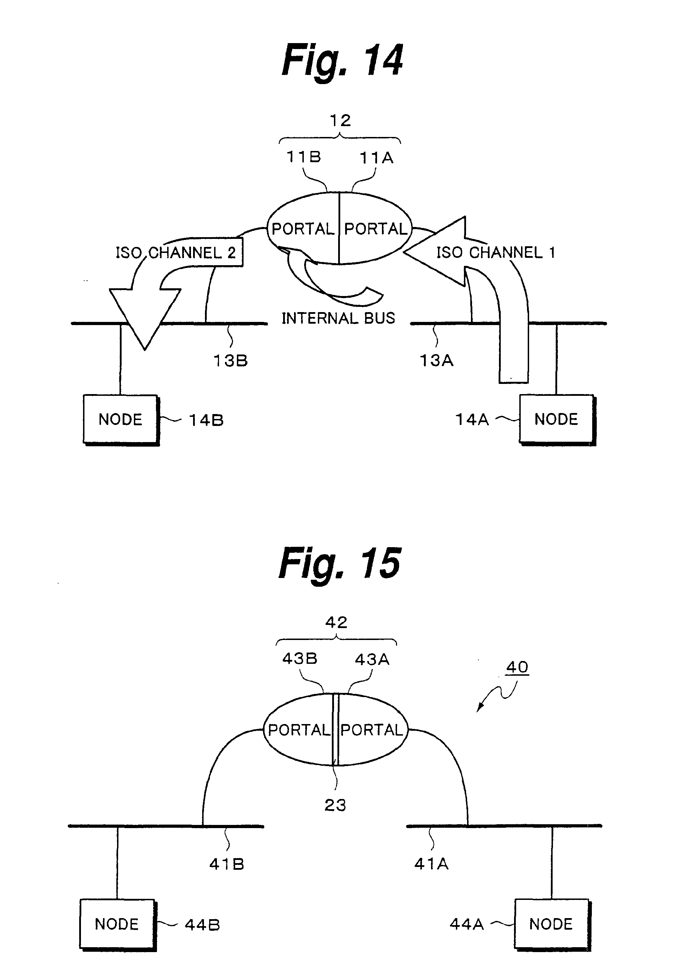

In addition, as shown in Fig. 14, in the conventional IEEE 1394 standard, the case of which stream data is transmitted from a node 14A on a local bus 13A to a portal 11B through a portal 11A connected to the local bus 13A is not considered. Thus, when such stream data were handled, using the defined method, STREAM_CONTROL entries could be properly set. As a result, stream data could not be received by a designated destination. In addition, when the STREAM_CONTROL entries were set in the above-described method, unexpected stream data would be transmitted to the local bus 13B. As a result, the data transfer bandwidth of the local bus 13B would be wasted.

Thus, in a network system that complies with the IEEE 1394 standard, when data can be transmitted and received between the portal 11A connected to the local bus 13A and the node 14B on the local bus 13B and data can be transmitted and received between the node 14A on the local bus 13A and the portal 11B connected to the 13B, the functionality of the entire network system will be improved.

Various respective aspects and features of the invention are defined in the appended claims. Features from the dependent claims may be combined with features of the independent claims as appropriate and not merely as explicitly set out in the claims.

An embodiment of the present invention seeks to provide a data transmitting and receiving apparatus and a data transmitting and receiving method that allow the functionality of the entire network system to be improved.

A first aspect of the present invention is a data transmitting and receiving apparatus for transmitting and receiving data between an external device and a pertinent bus of a plurality of buses connected by a bridge, the external device forming one portion of the bridge, the data transmitting and receiving apparatus comprising a storing means for storing first information and second information, the first information representing whether the transmission source or the transmission destination of the data is the data transmitting and receiving apparatus, the second information representing whether or not to the data should be transmitted to the pertinent bus, a setting means for setting the first information and the second information stored in the storing means to a predetermined state corresponding to an external request, and a transmitting and receiving means for transmitting and receiving the data to/from the pertinent bus or the external device corresponding to the first information and the second information stored in the storing means.

As a result, according to the data transmitting and receiving apparatus, data can be transmitted and received in such a manner that the data transmitting and receiving apparatus is a transmission source or a transmission destination without affecting data that is transmitted and received on a bus to which the data transmitting and receiving apparatus is connected depending on the settings of the first information and the second information.

A second aspect of the present invention is a data transmitting and receiving method for transmitting and receiving data between an external device and a pertinent bus of a plurality of buses connected by a bridge, the external device forming one portion of the bridge, the data transmitting and receiving method comprising the steps of storing first information and second information, the first information representing whether the transmission source or the transmission destination of the data is a local device, the second information representing whether or not to the data should be transmitted to the pertinent bus and setting the first information and the second information that have been stored to a predetermined state corresponding to an external request, and transmitting and receiving the data to/from the pertinent bus or the external device corresponding to the first information and the second information that have been set.

As a result, according to the data transmitting and receiving method, data can be transmitted and received in such a manner that a local device is a transmission source or a transmission destination without affecting data that is transmitted and received on a bus to which the data transmitting and receiving apparatus is connected depending on the settings of the first information and the second information.

The invention will now be described by way of example with reference to the accompanying drawings, throughout which like parts are referred to by like references, and in which:

Fig. 1 is a schematic diagram showing the concept of structural elements and a protocol architecture of an interface that complies with the IEEE 1394 standard;

Fig. 2 is a schematic diagram showing the concept for explaining an asynchronous transfer;

Figs. 3A and 3B are schematic diagrams showing the concept for explaining an acquisition of a bus use right using arbitration;

Fig. 4 is a schematic diagram showing the concept for explaining an isochronous transfer;

Figs. 5A and 5B are schematic diagrams for explaining an address assignment in a CSR architecture;

Fig. 6 is a schematic diagram showing the concept of a basic structure of a 1394-network using a 1394-bridge;

Fig. 7 is a schematic diagram showing the concept of an example of the structure of the 1394-network using a plurality of 1394-birdges;

Fig. 8 is a block diagram showing the structure of two portal bridges;

Fig. 9 is a schematic diagram showing the concept of a format of a STREAM_CONTROL entry;

Fig. 10 is a table showing statuses of an "st" field of the STREAM_CONTROL entry;

Fig. 11 is a table showing the relation between values and data speeds of an "spd" field of the STREAM_CONTROL entry;

Fig. 12 is a schematic diagram showing the concept of transmission and reception of stream data through a local bus;

Fig. 13 is a schematic diagram showing the concept for explaining stream data transmitted from a portal through an internal bus;

Fig. 14 is a schematic diagram for explaining a flow of stream data received by a portal;

Fig. 15 is a block diagram showing the structure of an IEEE 1394 network system according to an embodiment of the present invention;

Fig. 16 is a block diagram showing the structure of a bridge according to the embodiment;

Fig. 17 is a table showing operations of a portal corresponding to the value of a "p" bit according to the present embodiment;

Fig. 18 is a table showing operations of a portal corresponding to the value of an "id" bit according to the present embodiment;

Fig. 19 is a schematic diagram showing the concept for explaining a flow of stream data according to the present embodiment;

Fig. 20 is a schematic diagram showing the concept for explaining a flow of stream data according to the present embodiment; and

Fig. 21 is a schematic diagram showing the concept for explaining a flow of stream data according to the present embodiment.

Next, with reference to the accompanying drawings, an embodiment of the present invention will be described.

(1) Structure of Network System according to Embodiment

In Fig. 15, reference numeral 40 represents a network system according to an embodiment of the present invention. The network system 40 complies with the IEEE 1394 standard. The network system 40 is composed of a first local bus 41A, a second local bus 41B, and a bridge 42 in such a manner-that the first local bus 41A and the second local bus 41B are connected through the bridge 42. The bridge 42 complies with the IEEE 1394 standard.

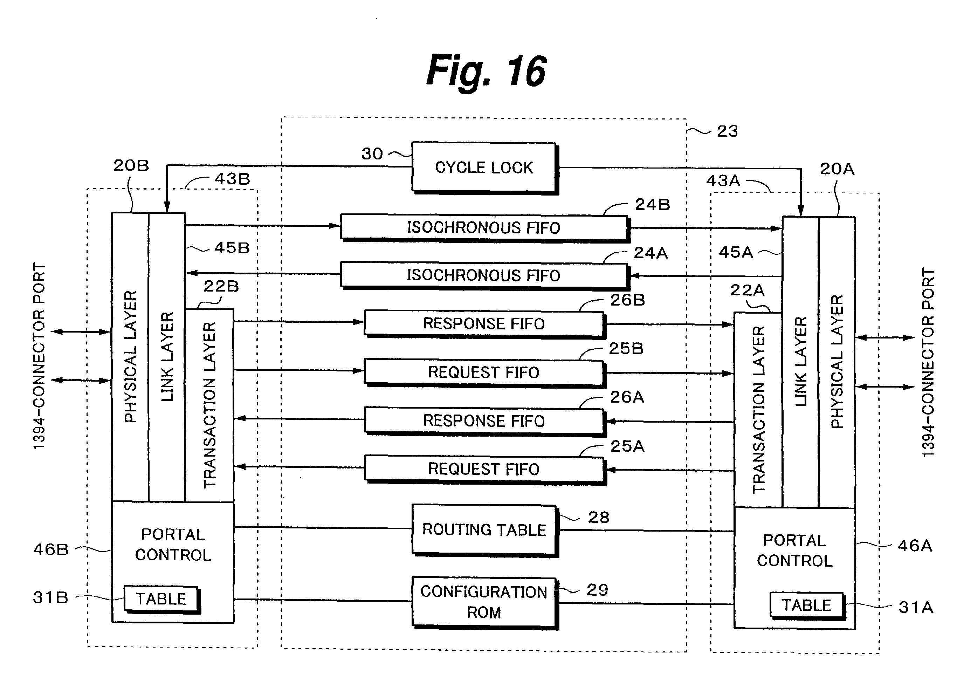

In Fig. 16, similar portions to those in Fig. 8 are denoted by similar reference numerals. Referring to Fig. 16, the bridge 42 is composed of a first portal 43A, a second portal 43B, and an internal bus 23 in such a manner that the first portal 43A and the second portal 43B that are connected to the first local bus 41A and the second local bus 41B, respectively, are connected to each other through the internal bus 23.

The first portal 43A has a physical layer 20A, a link layer 45A, a transaction layer 22A, a portal control 46A, and an application layer (not shown). The application layer functions as a 1394-node. Likewise, the second portal 43B has a physical layer 20B, a link layer 45B, a transaction layer 22B, a portal control 46B, and an application layer (not shown). The application layer functions as a 1394-node.

In the first portal 43A and the second portal 43B, stream data received through the first local bus 41A and the second local bus 41B is supplied to the link layers 45A and 45B trough the physical layers 20A and 20B, respectively. The link layers 45A and 45B extract stream data whose destination is the link layers 45A and 45B from the received stream data, respectively. In addition, corresponding to stream routing tables 31A and 31B that the portal controls 46A and 46B have, the link layers 45A and 45B extract stream data to be forwarded to the second local bus 41B and the first local bus 41A from the received stream data, respectively.

In the first portal 43A and the second portal 43B, stream data that has been extracted by the link layer 45A and the link layer 45B and whose destination is the first portal 43A and the second portal 43B is successively stored to isochronous receiving FIFOs (not shown) of the link layers 45A and 45B, respectively. When necessary, the stream data is sent to the application layers (not shown). On the other hand, in the first portal 43A and the second portal 43B, stream data to be forwarded to the second local bus 41B and the first local bus 41A is transmitted to the second portal 43B and the first portal 43A through the internal bus 23, respectively.

On the other hand, in the second portal 43B and the first portal 43A, the stream data is received by the link layers 45B and 45A, respectively.

When necessary, in the second portal 43B and the first portal 43A, for example channel number converting processes are performed by the link layers 45B and 45A corresponding to the pertinent STREAM_CONTROL [i] entries of the stream routing tables 31B and 31A that the portal controls 46A and 46B have, respectively. Thereafter, the resultant data is transmitted to the second local bus 41B and the first local bus 41A to which the second portal 43B and the first portal 43A are connected through the physical layers 20B and 20A, respectively.

In such a manner, in the network system 40, stream data is transmitted and received between the first local bus 41A and the second local bus 41B through the bridge 42.

In addition to such a structure, in the network system 40, each of the first portal 43A and the second portal 43B has a first bit for determining whether or not the transmission source or the transmission destination of stream data to be transmitted or received is the first portal 43A or the second portal 43B and a second bit for determining whether or not the stream data should be transmitted to the first local bus 41A or the second local bus 41B to which the first portal 43A or the second portal 43B are connected, respectively.

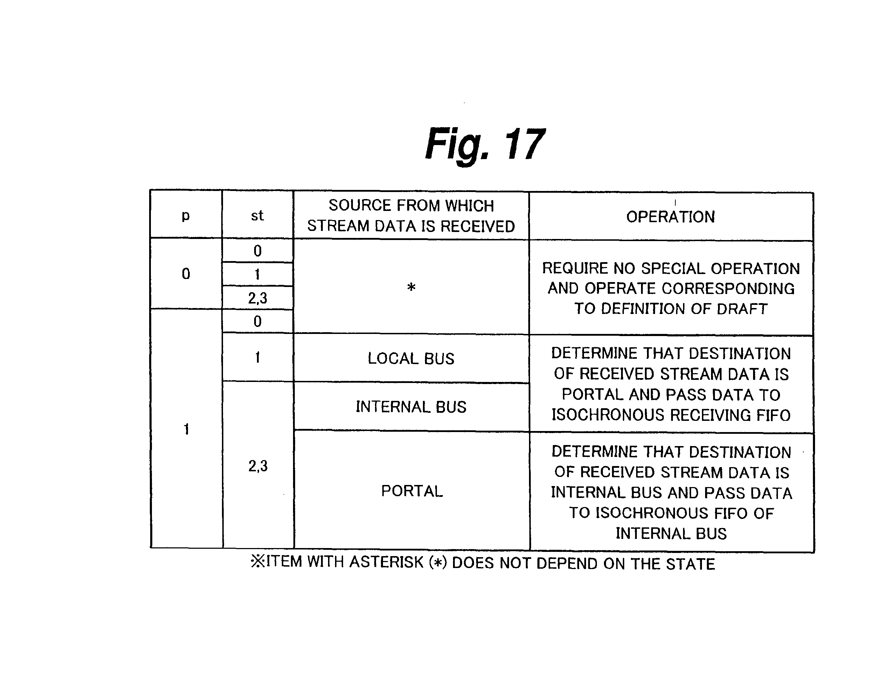

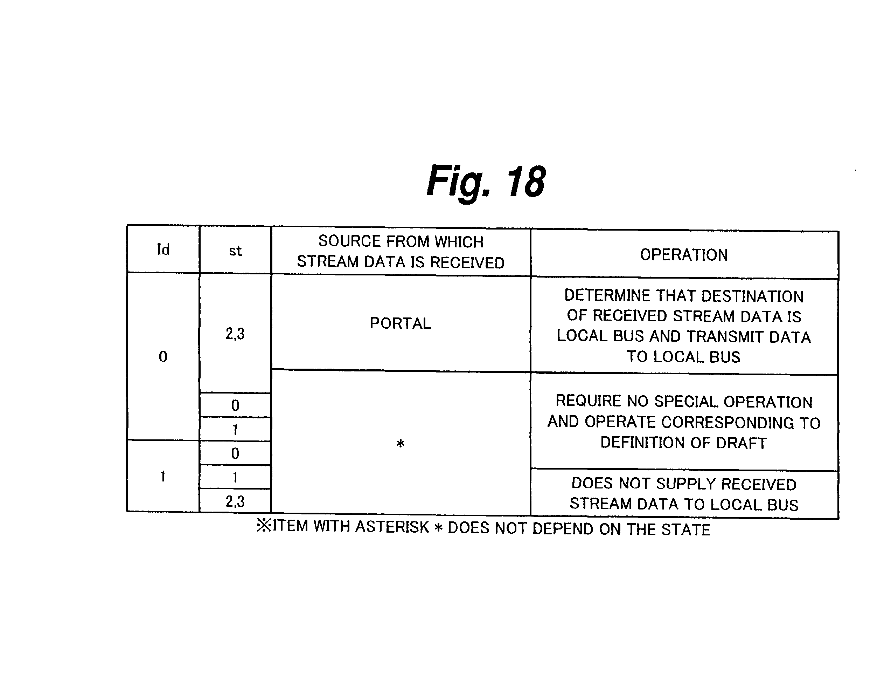

In other words, as shown in Fig. 17, in the network system 40, bit 15 of the "rsv" field F (see Fig. 9) of the STREAM_CONTROL entry shown in Fig. 9 is defined as a bit "p" for determining whether or not the transmission source or the transmission destination of stream data to be transmitted or received is the local portal. In addition, as shown in Fig. 18, bit 16 of the "rsv" field F6 is defined as a bit "id" for determining whether or not the stream data should be transmitted to the first local bus 41A and the second local bus 41B to which the first portal 43A and the second portal 43B are connected, respectively.

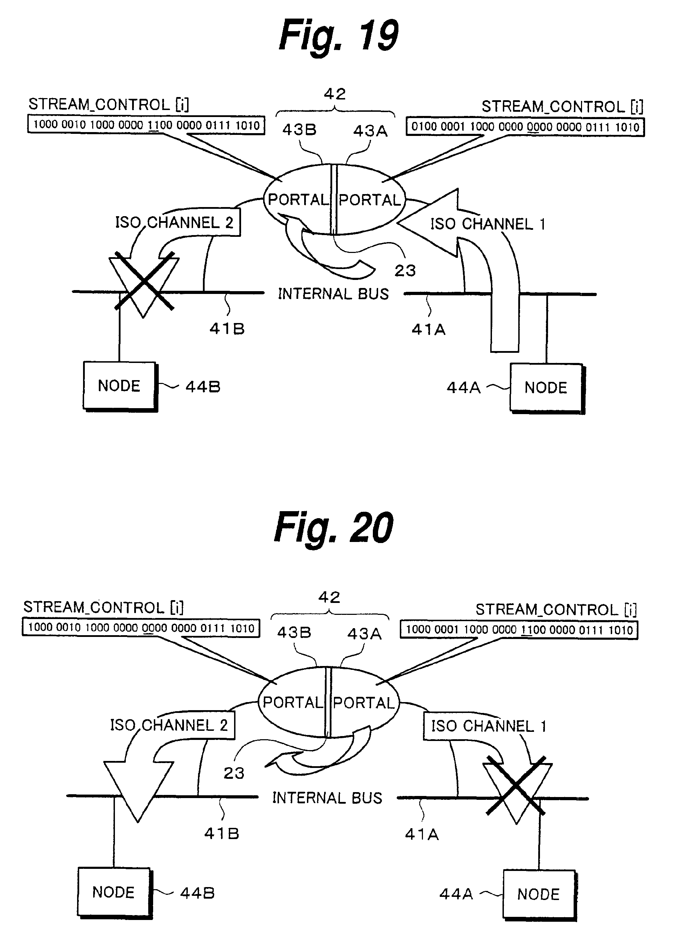

As shown in Fig. 19, when a request for transmitting data is transmitted from the node 44A on the first local bus 41A to the second portal 43B on the second local bus 41B, the portal controls 46A and 46B of the first portal 43A and the second portal 43B set the pertinent STREAM_CONTROL [i] entries in the same manner as stream data is forwarded. In addition, the portal control 46B of the second portal 43B sets "0x1" (that represents that the destination of the stream data is the second portal 43B) to the "p" field of the pertinent STREAM_CONTROL [i] entry of the portal control 46B and "0x1" (that represents that the stream data is not transmitted to the second local bus 41B) to the "id" field thereof.

Thereafter, stream data whose destination is the second portal 43B and that has been transmitted from the node 44A to the first local bus 41A is transmitted to the second portal 43B through the internal bus 23 by the link layer 45A of the first portal 43A corresponding to the pertinent STREAM_CONTROL [i] entry that the portal control 46A of the first portal 43A has.

Since the "p" field of the pertinent STREAM_CONTROL [i] entry that the portal control 46B of the second portal 43B has is "0x1", the link layer 45B of the second portal 43B that has received the stream data determines that the destination of the stream data is the second portal 43B and stores the stream data to the stream receiving FIFO. On the other hand, since the "id" field of the pertinent STREAM_CONTROL [i] entry is "0x1", the link layer 45B determines that the stream data should not been transmitted to the second local bus 41B. Thus, the link layer 45B does not transmit the stream data to the physical layer 20B.

Thus, the second portal 43B can properly receive stream data whose destination is itself. In addition, stream data that is not received by the node 44b can be prevented from being transmitted from the second portal 43B to the second local bus 41B.

Using such a function, the same stream data can be transmitted from the node 44A on the first local bus 41A to the second portal 43B, the node 44B other than the second portal 43B on the second local bus 41B, and another node routed through the second local bus 41B.

When the portal controls 46A and 46B of the first portal 43A and the second portal 43B receive such requests, the portal controls 46A and 46B sets the pertinent STREAM_CONTROL [i] entries in the same manner as stream data is forwarded. In addition, the portal control 46B of the second portal 43B sets "0x1" (that represents that the destination of the stream data is the second portal 43B) to the "p" field of the pertinent STREAM_CONTROL [i] entry of the portal control 46B and bit "0x0" (that represent that the data stream should be transmitted to the second local bus 41B) to the "id" field thereof.

As a result, stream data whose destination if the portal 42B and that has been transmitted from the node 44A to the first local bus 41A is forwarded to the second portal 43B through the internal bus 23 by the link layer 45A of the first portal 43A corresponding to the pertinent STREAM_CONTROL [i] entry that the portal control 46A of the first local bus 41A has.

Since the "p" field of the pertinent STREAM_CONTROL [i] entry that the portal control 46B has is "0x1", the link layer 45B of the second portal 43B that has received the second portal 43B determines that the destination of the stream data is the second portal 43B and stores the stream data to the stream receiving FIFO of the link layer 45B. In addition, since the "id" field of the pertinent STREAM_CONTROL [i] entry is "0x0", the link layer 45B determines that the stream data should be transmitted to the second local bus 41B and transmits the stream data to the physical layer 20B. As a result, the stream data is transmitted to the second local bus 41B through the physical layer 20B. The stream data is transmitted to the destination node 44B on the second local bus 41B and another destination node routed through the second local bus 41B.

In such a manner, in the network system 40, the first portal 43A and the second portal 43B can receive stream data from the second local bus 41B and the first local bus 41A connected to the second portal 43B and the first portal 43A that compose the bridge 42, respectively. In addition, when the "p" field and the "id" field of the pertinent STREAM_CONTROL [i] entry are set corresponding to the tables shown in Figs. 17 and 18, the present embodiment can be applied to a 1394-bridge and a 1394-portal that do not comply with the present embodiment without losing the compatibility of their operations.

On the other hand, as shown in Fig. 20, when the first portal 43A transmits stream data to the node 44b on the second local bus 41B or when the first portal 43A transmits stream data to another node routed through the second local bus 41B, the portal control 46A of the first portal 43A sets the pertinent STREAM_CONTROL [i] entry thereof in the same manner as stream data is forwarded. In addition, the portal control 46B sets the pertinent STREAM_CONTROL [i] entry thereof in the same manner as stream data is received.

In addition, the portal control 46A of the first portal 43A sets "0x2 (Talker)" or "0x3 (Talker)" (that represents that the first portal 43A transmits stream data) to the "st" field of the pertinent STREAM_CONTROL [i] entry thereof, "0x1" (that represents that the stream data is transmitted to the internal bus) to the "p" field thereof, "0x1" (that represents that the stream data is not transmitted to the first local bus 41A) to the "id" field thereof. However, in this case, when a block allows the destination of stream data to be uniquely identified, the "st" field may be "0x1 (Listener)".

Thus, stream data generated by the first portal 43A is transferred by the first portal 43A itself corresponding to the pertinent STREAM_CONTROL [i] entry that corresponds to the channel number.

Actually, since the "p" field of the pertinent STREAM_CONTROL [i] entry that the portal control 46A has is "0x1", the link layer 45A of the first portal 43A transmits the stream data to the second portal 43B through the internal bus 23. In addition, since the "id" field is "0x1", the link layer 45A determines that the stream data should not be transmitted to the first local bus 41A. Thus, the link layer 45A does not transmit the stream data to the physical layer 20A.

When the link layer 45B of the second portal 43B has received the steam data through the internal bus 23, the link layer 45B transmits the stream data to the second local bus 41B corresponding to the pertinent STREAM_CONTROL [i] entry of the portal control 46B of the second portal 43B.

Thus, the first portal 43A can transmit the stream data from the second portal 43B through the internal bus 23. In addition, stream data that is not received by any node on the first local bus 41A can be prevented from being transmitted from the first portal 43A.

Using such a function, the same steam data as that the second portal 43B receives can be transmitted to the node 44A other than the first portal 43A on the first local bus 41A and another node routed through the first local bus 41A.

Actually, the portal control 46A of the first portal 43A sets the pertinent STREAM_CONTROL [i] entries of the first portal 43A and the second portal 43B in the same manner as stream data is forwarded. In addition, the portal control 46A of the first portal 43A sets bit "0x1" (that represents that the destination of the stream data is the internal bus 23) to the "p" field of the pertinent STREAM_CONTROL [i] entry thereof and bit [0x0] (that represents that the stream data is transmitted to the first local bus 41A) to the "id" field thereof.

Thus, in the same manner as described above, stream data generated by the first portal 43A is successively sent from the first portal 43A to the second local bus 41B through the internal bus 23 and the second portal 43B. In addition, since the "id" field of the pertinent STREAM_CONTROL [i] entry of the first portal 43A is "0x0", the stream data is transmitted to the first local bus 41A.

Thus, unlike with the conventional network system, in the network system 40, stream data can be transmitted from the first local bus 41A or the second local bus 41B connected to the first portal 43A or the second portal 43B that composes the bridge 42 to the second portal 43B or the first portal 43A, respectively. In addition, corresponding to the tables shown in Figs. 17 and 18, when predetermined values are to the "p" field of the pertinent STREAM_CONTROL [i] entry and the "id" field thereof, the same stream data can be transmitted to the first local bus 41A or the second local bus 41B without need to considering the destination of the stream data is the internal bus 23, the first local bus 41A, or the second local bus 41B. Thus, with the common STREAM_CONTROL entries, stream data can be transmitted.

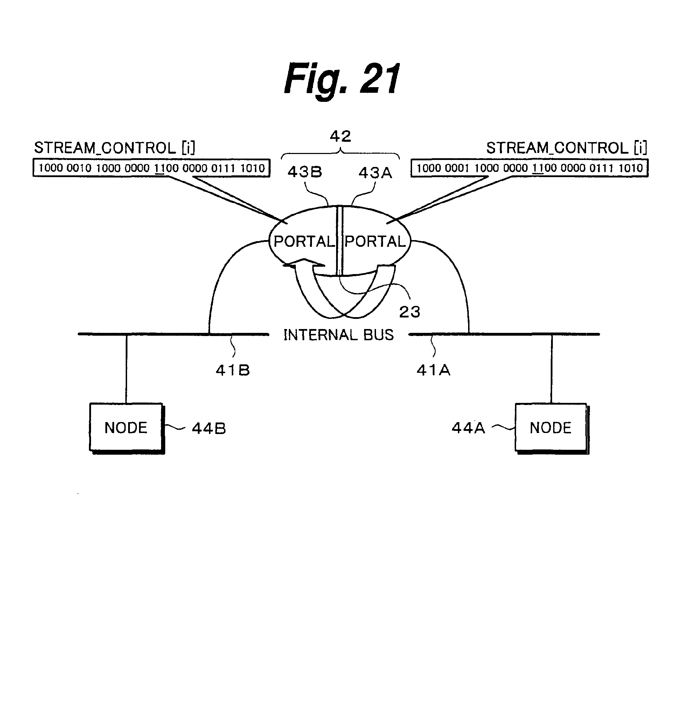

In addition, as shown in Fig. 21, when the first portal 43A needs to transmit stream data to the second portal 43B that composes the bridge 42 along with the first portal 43A, the portal control 46A of the first portal 43A sets "0x1" to the "p" field of the pertinent STREAM_CONTROL [i] entry thereof and "0x1" to the "id" field thereof. In addition, the portal control 46A accesses the second portal 43B and sends to the second portal 43B a message that causes "0x1" and "0x1" to be set to the "p" field and the "id" field of the pertinent STREAM_CONTROL [i] entry that the portal control 46B of the second portal 43B has.

Thus, stream data that is generated by the first portal 43A is transferred by the first portal 43A itself corresponding to the pertinent STREAM_CONTROL [i] entry.

Actually, since the "p" field of the pertinent STREAM_CONTROL [i] entry is "0x1", the link layer 45A of the first portal 43A determines that the destination of the stream data is the internal bus 23 and transmits the stream data to the second portal 43B through the internal bus 23. On the other hand, since the "id" field is "0x1", the link layer 45A determines that the stream data should not be transmitted to the first local bus 41A. Thus, the link layer 45A does not transmit the stream data to the physical layer 20A.

In addition, since the "p" field of the pertinent STREAM_CONTROL [i] entry of the portal control 46B of the second portal 43B is "0x1", the link layer 45B of the second portal 43B that has received the stream data through the internal bus 23 determines that the destination of the stream data is the second portal 43B and stores the stream data to the local stream receiving FIFO of the link layer 45B. On the other hand, since the "id" field of the pertinent STREAM_CONTROL [i] entry is "0x1", the link layer 45B determines that the stream data should not be transmitted to the second local bus 41B. Thus, the link layer 45B does not transmit the stream data to the physical layer 20B.

In such a manner, in the network system 40, stream data can be properly transmitted and received between the first portal 43A and the second portal 43B. In addition, stream data that is not received by any node on the first local bus 41A and the second local bus 41B connected to the first portal 43A and the second portal 43B can be prevented from being transmitted, respectively.

(2) Operation and Effect of Embodiment

In the above-described structure, in the network system 40, bit 15 of the "rsv" field F6 (see Fig. 9) of the pertinent STREAM_CONTROL entry of each of the first portal 43A and the second portal 43B that compose the bridge 42 is defined as a bit "p" for determining whether or not the transmission source or the transmission destination of stream data to be transmitted or received is the first portal 43A or the second portal 43B. In addition, bit 16 of the "rsv" field F6 is defined as a bit "id" for determining whether or not the stream data should be transmitted to the first local bus 41A and the second local bus 41B to which the first portal 43A and the second portal 43B are connected, respectively. The "p" field and the "id" field are set corresponding to the transmission and reception formats of desired stream data.

Thus, in the network system 40, stream data can be transmitted and received between the node 44A on the first local bus 41A or the node 44b on the second local bus 41B and the second portal 43B or the first portal 43A and between the first portal 43A or the second portal 43B and the node 44B on the second local bus 41B or the node 44A on the first local bus 41A without affecting data stream transmitted and received to/from the first local bus 41A or the second local bus 41B.

According to the above-described structure, bit 15 of the "rsv" field F6 of the pertinent STREAM_CONTROL entry of each of the first portal 43A and the second portal 43B that compose the bridge 42 is used as a bit "p" for determining whether data stream to be transmitted or received is the first portal 43A or the second portal 43B. In addition, bit 16 of the "rsv" field F6 is used as a bit "id" for determining whether or not the stream data should be transmitted to the first local bus 41A and the second local bus 41B to which the first portal 43A and the second portal 43B are connected, respectively. Thus, stream data can be transmitted and received between the node 44A on the first local bus 41A or the node 44b on the second local bus 41B and the second portal 43B or the first portal 43A and between the first portal 43A or the second portal 43B and the node 44b on the second local bus 41B or the node 44A on the first local bus 41A without affecting stream data transmitted and received to/from the first local bus 41A and the second local bus 41B. Thus, a network system that allows stream data to be properly transmitted and received and the functionally to be improved can be accomplished.

(3) Another Embodiment

In the above-described embodiment, the embodiment is applied for the network system 40 of which the first local bus 41A and the second local bus 41B are connected through the bridge 42 was described. However, the present invention is not limited to such a case. In other words, the present invention can be applied for a network of which three or more local buses are connected through a bridge.

In the above-described embodiment, the case of which the bridge 42 is a two-portal bridge was described. However, the present invention is not limited to such a case. In other words, the present invention can be applied for the case of which a bridge is composed of three or more portals.

In the above-described embodiment, as first information that represents whether or not the transmission source or the transmission destination of data is a local portal and second information that represents whether or not data should be transmitted to a pertinent bus, bit 15 ("p" field) and bit 16 ("id" field) of the "rsv" field F6 (see Fig. 9) of the pertinent STREAM_CONTROL entry are used. However, the present invention is not limited to such an example. In other words, flags corresponding to bit 15 and bit 16 of the "rsv" field of the pertinent STREAM_CONTROL entry may be provided. Moreover, in addition to bit 15 and bit 16 of the "rsv" field of the pertinent STREAM_CONTROL entry, such flags can be provided. In addition, as the first information and the second information, other than bits and flags may be used.

In the above-described embodiment, the case of which first information that represents whether the transmission source or the transmission destination of data is the local portal (in the embodiment, the first information is the "p" field of the pertinent STREAM_CONTROL entry) and second information that represents whether or not data should be transmitted to a pertinent bus (in the embodiment, the second information is the "id" field of the pertinent STREAM_CONTROL entry) are stored as a storing means in the portal control 46A and the portal control 46B, respectively, was described. However, the present invention is not limited to such a case. In other words, according to an embodiment, such information may be stored in for example a configuration ROM 29 other than the portal control 46A and the portal control 46B or in the link layer 45A of the first portal 43A and the link layer 45B of the second portal 43B.

In the above-described embodiment, as setting means for setting first information and second information corresponding to an external request, the portal control 46A and the portal control 46B are used. However, the present invention is not limited to such an example. In other words, various types of setting means such as a memory driver and link layers 45A and 45B can be used depending on the storage locations for the first information and the second information.

According to the above-described embodiment, corresponding to the values of the "p" field and the "id" field of the pertinent STREAM_CONTROL entry, as transmitting and receiving means for transmitting and receiving stream data to/from the first local bus 41A and the second local bus 41B or external devices (in the above-described embodiment, the second portal 43B and the first portal 43A), the link layer 45A and the link layer 45B are used. However, the present invention is not limited to such an example. In other words, corresponding to the structure of the data transmitting and receiving apparatus of the present invention, such functions can be provided to corresponding structural portions.

The first aspect of the present invention is a data transmitting and receiving apparatus for transmitting and receiving data between an external device and a pertinent bus of a plurality of buses connected by a bridge, the external device forming one portion of the bridge, the data transmitting and receiving apparatus comprising a storing means for storing first information and second information, the first information representing whether the transmission source or the transmission destination of the data is the data transmitting and receiving apparatus, the second information representing whether or not to the data should be transmitted to the pertinent bus, a setting means for setting the first information and the second information stored in the storing means to a predetermined state corresponding to an external request, and a transmitting and receiving means for transmitting and receiving the data to/from the pertinent bus or the external device corresponding to the first information and the second information stored in the storing means. As a result, according to the data transmitting and receiving apparatus, data can be transmitted and received in such a manner that the data transmitting and receiving apparatus is a transmission source or a transmission destination without affecting data that is transmitted and received on a bus to which the data transmitting and receiving apparatus is connected depending on the settings of the first information and the second information. Thus, a data transmitting and receiving apparatus that allows the functionality of the entire network to be improved can be accomplished.

The second aspect of the present invention is a data transmitting and receiving method for transmitting and receiving data between an external device and a pertinent bus of a plurality of buses connected by a bridge, the external device forming one portion of the bridge, the data transmitting and receiving method comprising the steps of storing first information and second information, the first information representing whether the transmission source or the transmission destination of the data is a local device, the second information representing whether or not to the data should be transmitted to the pertinent bus and setting the first information and the second information that have been stored to a predetermined state corresponding to an external request, and transmitting and receiving the data to/from the pertinent bus or the external device corresponding to the first information and the second information that have been set. As a result, according to the data transmitting and receiving method, data can be transmitted and received in such a manner that a local device is a transmission source or a transmission destination without affecting data that is transmitted and received on a bus to which the data transmitting and receiving apparatus is connected depending on the settings of the first information and the second information. Thus, a data transmitting and receiving apparatus that allows the functionality of the entire network to be improved can be accomplished.

Although the present invention has been shown and described with respect to an illustrative embodiment thereof, it should be understood by those skilled in the art that the foregoing and various other changes, omissions, and additions in the form and detail thereof may be made therein without departing from the spirit and scope of the present invention.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1.  A data transmitting and receiving apparatus for transmitting and receiving data between an external device and a pertinent bus of a plurality of buses connected by a bridge, the external device forming one portion of the bridge, the data transmitting and receiving apparatus comprising:

    storing means for storing first information and second information, the first information representing whether the transmission source or the transmission destination of the data is the data transmitting and receiving apparatus, the second information representing whether or not to the data should be transmitted to the pertinent bus;

    setting means for setting the first information and the second information stored in said storing means to a predetermined state corresponding to an external request; and

    transmitting and receiving means for transmitting and receiving the data to/from the pertinent bus or the external device corresponding to the first information and the second information stored in said storing means.

2.  The data transmitting and receiving apparatus as set forth in claim 1,

    wherein the bridge is a bridge complying with IEEE (The Institute of Electrical and Electronics Engineers) 1394 high performance serial bus standard.

3.  The data transmitting and receiving apparatus as set forth in claim 1,

    wherein the first information and the second information are bits or flags.

4.  A data transmitting and receiving method for transmitting and receiving data between an external device and a pertinent bus of a plurality of buses connected by a bridge, the external device forming one portion of the bridge, the data transmitting and receiving method comprising the steps of:

    storing first information and second information, the first information representing whether the transmission source or the transmission destination of the data is a local device, the second information representing whether or not to the data should be transmitted to the pertinent bus and setting the first information and the second information that have been stored to a predetermined state corresponding to an external request; and

transmitting and receiving the data to/from the pertinent bus or the external device corresponding to the first information and the second information that have been set.

5.  The data transmitting and receiving method as set forth in claim 4,

    wherein the bridge is a bridge complying with IEEE (The Institute of Electrical and Electronics Engineers) 1394 high performance serial bus standard.

6.  The data transmitting and receiving method as set forth in claim 4,

    wherein the first information and the second information are bits or flags.

# Fig. 1

EP 1 193 914 A2

| | |
|---|---|
| 3A | APPLICATION LAYER |
| | 3 |

| | |
|---|---|
| | 2 |
| | TRANSACTION LAYER |
| | 2A |

2

2B — MANAGEMENT LAYER (SBM)

LINK LAYER — 1B

1

PHYSICAL LAYER — 1A

1394 CONNECTOR PORT

## Fig. 2

A timing diagram along a TIME axis showing: Ack block, Subaction gap (t1–t2), arbitration (t2–t3), packet (t3–t4), Ack gap (t4–t5), Ack block (t5–t6), Subaction gap (t6).

# Fig. 3A

ROOT

A

request        request

B           D

request        data_prefix

C           E

a) REQUEST FOR BUS USE RIGHT

# Fig. 3B

ROOT

A

data_prefix        grant

B           D

data_prefix        data_prefix

C           E

b) PERMISSION FOR BUS USE RIGHT

EP 1 193 914 A2

EP 1 193 914 A2

# Fig. 4

CHANNEL 1    CHANNEL 2    CHANNEL 3

125 [μs]

| CSP | Iso gap | arb | packet | Iso gap | arb | packet | Iso gap | arb | packet | · · · | CSP |

TIME

EP 1 193 914 A2

**Fig. 5A**

| bus #0 | node #0 | INITIAL MEMORY SPACE | CRS ARCHITECTURE | 0 |
|---|---|---|---|---|
| bus #1 | node #1 | | SERIAL BUS | 512 |
| | | | ROM | 1024 |
| | | | | 2048 |
| | | | INITIAL UNIT SPACE | |
| bus #1022 | node #62 | | | |
| bus #1023 (LOCAL BUS) | node #63 (BROADCAST) | PRIVATE | | |
| | | REGISTER | | 256M |

**Fig. 5B**

| BUS ID | NODE ID | |
|---|---|---|
| bus # | node # | ADDRESS SPACE DEDICATED FOR NODE |

10 BITS — 6 BITS — 48 BITS

16 BITS

# Fig. 6

# Fig. 7

EP 1 193 914 A2

## Fig. 8

EP 1 193 914 A2

# Fig. 9

| 32 · · · · · · · · · · · · · · · · · · 16 | 15 14 · · · · · · · · · · · · · · · 210 |
|---|---|

| st | channel | l | spd | overhead | rsv | payload |
|---|---|---|---|---|---|---|
| 2 | 6 | 1 | 3 | 4 | 2 | 14 |
| F1 | F2 | F3 | F4 | F5 | F6 | F7 |

# Fig. 10

| Value of st | atream status |
|---|---|
| 0 | Inactive |
| 1 | Listener |
| 2 | Talker |
| 3 | Talker (real location proxy) |

# Fig. 11

| Value of spd | Data rate |
|---|---|
| 0 | S100 |
| 1 | S200 |
| 2 | S400 |
| 3 | S800 |
| 4 | S1600 |
| 5 | S3200 |
| 6-7 | Reserved |

# Fig. 12

STREAM_CONTROL [i]

| 1000 0010 1000 0000 0000 0000 0111 1010 |

12

11B    11A

STREAM_CONTROL [i]

| 0100 0001 1000 0000 0000 0000 0111 1010 |

PORTAL | PORTAL

ISO CHANNEL 2

ISO CHANNEL 1

INTERNAL BUS

13B

13A

NODE ~ 14B

14A ~ NODE

# Fig. 13

12

11B    11A

PORTAL | PORTAL

ISO CHANNEL

INTERNAL BUS

13B

13A

NODE ~ 14B

## Fig. 14

12

11B    11A

PORTAL | PORTAL

ISO CHANNEL 2          ISO CHANNEL 1

INTERNAL BUS

13B          13A

NODE ~ 14B          14A ~ NODE

## Fig. 15

42

43B    43A

40

PORTAL | PORTAL

23

41B          41A

NODE ~ 44B          44A ~ NODE

## Fig. 16

# Fig. 17

| p | st | SOURCE FROM WHICH STREAM DATA IS RECEIVED | OPERATION |
|---|---|---|---|
| 0 | 0 | * | REQUIRE NO SPECIAL OPERATION AND OPERATE CORRESPONDING TO DEFINITION OF DRAFT |
| | 1 | | |
| | 2,3 | | |
| 1 | 0 | | |
| | 1 | LOCAL BUS | DETERMINE THAT DESTINATION OF RECEIVED STREAM DATA IS PORTAL AND PASS DATA TO ISOCHRONOUS RECEIVING FIFO |
| | 2,3 | INTERNAL BUS | |
| | | PORTAL | DETERMINE THAT DESTINATION OF RECEIVED STREAM DATA IS INTERNAL BUS AND PASS DATA TO ISOCHRONOUS FIFO OF INTERNAL BUS |

※ITEM WITH ASTERISK (∗) DOES NOT DEPEND ON THE STATE

EP 1 193 914 A2

## Fig. 18

| Id | st | SOURCE FROM WHICH STREAM DATA IS RECEIVED | OPERATION |
|---|---|---|---|
| 0 | 2,3 | PORTAL | DETERMINE THAT DESTINATION OF RECEIVED STREAM DATA IS LOCAL BUS AND TRANSMIT DATA TO LOCAL BUS |
| | 0 | * | REQUIRE NO SPECIAL OPERATION AND OPERATE CORRESPONDING TO DEFINITION OF DRAFT |
| | 1 | | |
| 1 | 0 | | |
| | 1 | | DOES NOT SUPPLY RECEIVED STREAM DATA TO LOCAL BUS |
| | 2,3 | | |

※ITEM WITH ASTERISK * DOES NOT DEPEND ON THE STATE

EP 1 193 914 A2

# Fig. 19

STREAM_CONTROL [i]

`1000 0010 1000 0000 1100 0000 0111 1010`

42

43B   43A

STREAM_CONTROL [i]

`0100 0001 1000 0000 0000 0000 0111 1010`

PORTAL | PORTAL

ISO CHANNEL 2

ISO CHANNEL 1

23

INTERNAL BUS

41B

41A

NODE — 44B

44A — NODE

# Fig. 20

STREAM_CONTROL [i]

`1000 0010 1000 0000 0000 0000 0111 1010`

42

43B   43A

STREAM_CONTROL [i]

`1000 0001 1000 0000 1100 0000 0111 1010`

PORTAL | PORTAL

ISO CHANNEL 2

ISO CHANNEL 1

23

INTERNAL BUS

41B

41A

NODE — 44B

44A — NODE

# Fig. 21

42

STREAM_CONTROL [i]

| 1000 0010 1000 0000 1100 0000 0111 1010 |

43B      43A

STREAM_CONTROL [i]

| 1000 0001 1000 0000 1100 0000 0111 1010 |

PORTAL   PORTAL

23

INTERNAL BUS

41B

41A

NODE — 44B

44A — NODE